Europäisches Patentamt

European Patent Office

Office européen des brevets

(11) Numéro de publication: **0 130 913**
**B1**

(12) **FASCICULE DE BREVET EUROPEEN**

(45) Date de publication du fascicule du brevet: 07.10.87

(21) Numéro de dépôt: 84401378.9

(22) Date de dépôt: 28.06.84

(51) Int. Cl.⁴: **B 01 J 12/00**, B 01 J 19/08 //
F23C11/00

(54) **Réacteur haute température associé à une zone de plasmagenèse, en particulier bru7leur mixte électricité-combustible.**

(30) Priorité: 29.06.83 FR 8310803
15.05.84 FR 8407471

(43) Date de publication de la demande:
09.01.85 Bulletin 85/02

(45) Mention de la délivrance du brevet:
07.10.87 Bulletin 87/41

(84) Etats contractants désignés:
AT BE CH DE FR GB IT LI LU NL SE

(56) Documents cités:
FR-A-1 293 330
FR-A-2 374 260

ELEKTROTECHNIEK, vol. 49, no. 26, 23
décembre 1971, pages 1248-1260, Meppel, NL;
F.P. PIETERMAAT: "Beschouwingen over
enkele recente elektrothermische procédés"

CHEMICAL ABSTRACTS, vol. 93, no. 8, aou7t
1980, page 152, no. 74469b, Columbus, Ohio,
US

(73) Titulaire: BERTIN & CIE
Boîte Postale No. 3
F-78370 Plaisir (FR)

(72) Inventeur: Galant, Serge
52, Impasse de la Halte Harmonie Ouest
F-78870 Bailly (FR)
Inventeur: Rebuffat, Denis
Avenue de l'Ursuya Demeure de Beyris
F-64100 Bayonne (FR)
Inventeur: Reybillet, Marc La Musardière
Rue Jean-Baptiste Castaings Quatre Vents
F-64340 Le Boucau (FR)
Inventeur: Martin dit Neuville, Hervé Sylvain
Henri
15, Avenue du Colonnel Coulomme
F-64500 Saint-Jean De Luz (FR)

(74) Mandataire: de Boisse, Louis et al
CABINET DE BOISSE 37, Avenue Franklin D.
Roosevelt
F-75008 Paris (FR)

Courier Press, Leamington Spa, England.

EP 0 130 913 B1

## Description

La présente invention concerne un réacteur haute température à oxydation totale ou partielle associée à une zone de plasmagenèse, en particulier un brûleur mixte électricité-combustible.

On connaît déjà des brûleurs utilisant de l'énergie électrique dissipée dans la flamme en complément ou en substitution de l'énergie provenant du combustible.

Comme documents montrant de tels brûleurs, on peut citer, par exemple:

Chemical Abstracts, vol. 93, N° 8, Août 1980, ref. No. 744696, page 152 donne un résumé du brevet polonais No. 101 090. Ces documents décrivent un réacteur comprenant un brûleur à plasma qui comporte une anode de forme conique. Le réacteur est délimité par des doubles parois en matière céramique et/ou graphite qui peuvent être refroidies.

FR—A—2 374 260 montre un réacteur comprenant un brûleur à plasma, dans lequel on introduit un mélange gaz-combustible-gaz oxydant en un seul point en aval des électrodes. Ce brevet décrit aussi un procédé pour l'oxydation d'hydrocarbures contenus dans un gaz naturel pauvre mettant en oeuvre ledit réacteur.

Elektrotechnik, vol. 49, N° 26, Décembre 1971, pages 1248—1260 décrit un brûleur à plasma comprenant trois électrodes alimentées avec du courant alternatif triphasé.

De tels brûleurs présentent généralement des problèmes d'usure des électrodes, de stabilité électrique, de production de produits polluants, et autres.

La présente invention vise à pallier ces inconvénients. En particulier, elle procure une usure faible des électrodes, un taux de production de gaz polluants faible (notamment en ce qui concerne les oxydes d'azote NOx), une bonne stabilité de plasma et de la combustion. Elle permet de fonctionner à enthalpie massique constante ou éventuellement à enthalpie et/ou température plus élevée pendant la période désirée.

Elle présente une grande souplesse d'utilisation et permet notamment d'utiliser l'énergie électrique aux heures où elle est disponible à faible prix (tarif de nuit). Une modulation de la puissance, de la température et/ou du processus de la réaction est rendue possible.

La présente invention a pour objet un réacteur haute température à oxydation totale ou partielle associée à une zone de plasmagenèse, ce réacteur comportant deux étages situés respectivement en amont et en aval de cette zone de plasmagenèse qu'ils prennent ainsi en sandwich, des agents réducteurs et/ou oxydants étant injectés dans l'un et/ou l'autre de ces étages afin de produire de l'énergie thermique et/ou des composés chimiques valorisables. Le réacteur peut comporter en outre une injection d'un gaz plasmagène dans la zone de plasmagenèse, laquelle peut être engendrée par des électrodes enrobées d'un flux de gaz plasmagène.

Avantageusement des moyens de répartition réglables au débit de l'agent oxydant et du débit de l'agent réducteur entre l'étage amont, l'étage aval et/ou la zone plasmagène peuvent être prévus, procurant une souplesse d'utilisation très grande.

Ainsi dans le cas où la réaction est une réaction de combustion entre combustible (réducteur) et comburant (oxydant), on peut par exemple injecter:

— dans la zone de plasmagenèse, un gaz plasmagène constitué par gaz combustible et passant autour des électrodes, ce qui permet de les refroidir et de réduire leur oxydation;

— dans la zone aval, un comburant ou éventuellement un mélange comburant-combustible, procurant ainsi une deuxième combustion (ou post-combustion). La zone de plasmagenèse remplit sa fonction d'apport thermique dans de bonnes conditions de fonctionnement.

Quand l'apport électrique n'est plus désiré, on peut modifier à volonté les différentes répartitions du combustible et du comburant.

Les agents réducteurs, oxydants et/ou plasmagènes peuvent être injectés sous forme de fluide gazeux et/ou de suspension de solides ou de liquides divisés dans un tel fluide.

L'agent oxydant pourra être de l'air.

L'agent réducteur fluide ou fluidifié pourra être notamment un gaz (propane, méthane, gaz pauvre provenant de réactions métallurgiques, gaz de bio-masse), un liquide (fuel ou autre hydrocarbure liquide...), un solide ou liquide pulvérisé et fluidifié (charbon, tourbes, lignite...).

Le gaz plasmagène peut être un agent réducteur, un agent neutre, les produits gazeux de la réaction recyclés en fonction de leur potentiel d'ionisation. Il peut véhiculer des additifs favorisant la formation du plasma. De préférence, les électrodes sont montées mobiles de manière à pouvoir compenser leur usure et/ou la consommation de leur matière par les réactions.

Dans un mode de réalisation de l'invention, le réacteur comporte trois électrodes et utilise un courant alternatif triphasé. Les électrodes peuvent être alimentées sous basse tension et haute intensité.

Le réacteur objet de l'invention peut être un brûleur dans lequel l'énergie électrique injectée par l'intermédiaire des électrodes contribue à la production d'énergie thermique et/ou de composés valorisables.

La réacteur peut être encore notamment un générateur de gaz chaud ou un générateur d'atmosphère contrôlée.

Le réacteur peut être aussi utilisé pour l'obtention des produits de réaction du gaz avec le matériau constituant les électrodes.

La description qui va suivre, donnée à titre d'exemple, fera bien comprendre comment l'invention peut être réalisée.

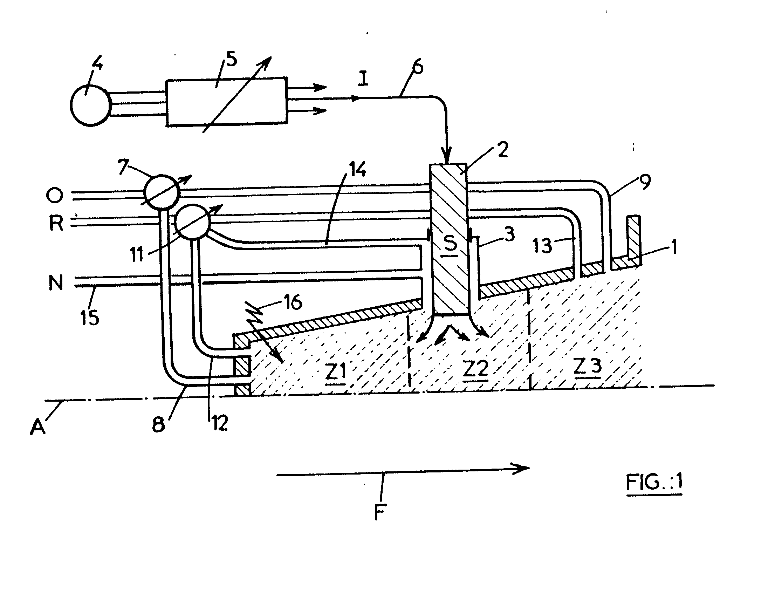

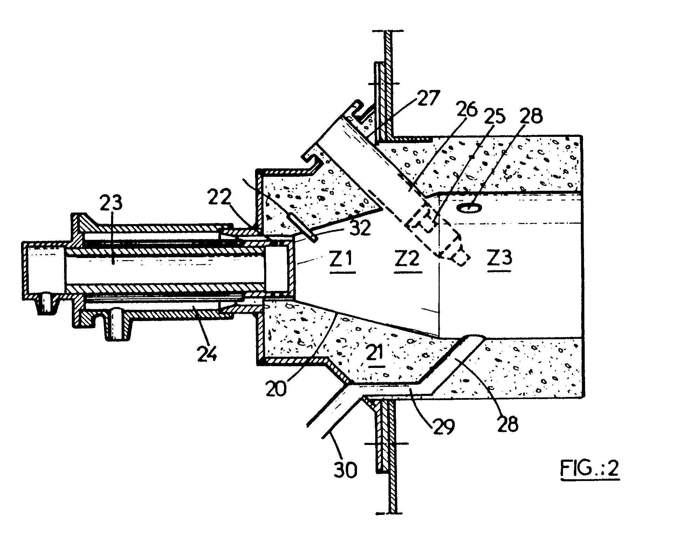

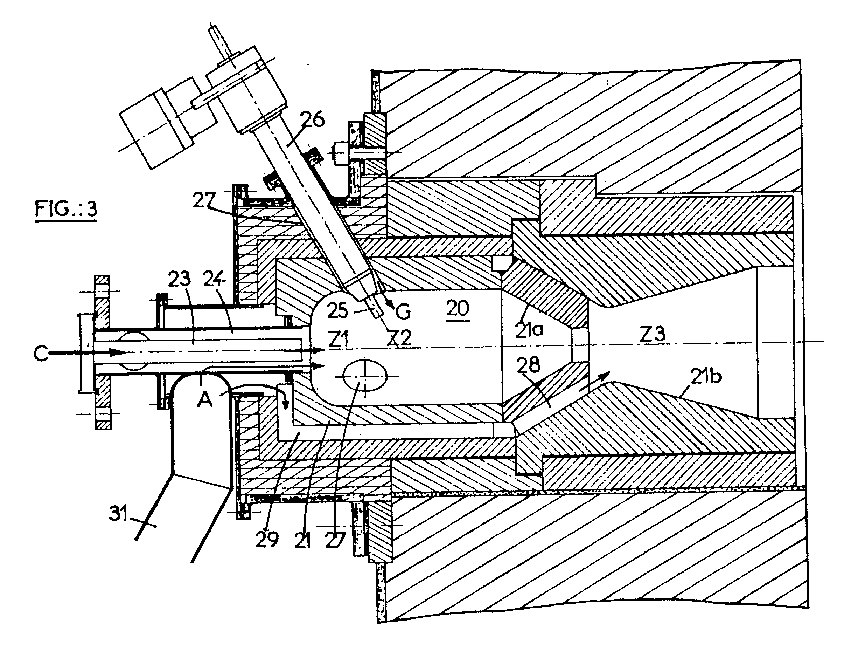

La figure 1 est une vue schématique partielle d'un réacteur selon l'invention, arrêtée le long de l'axe A de celui-ci. La figure 2 est une vue schématique en coupe d'un brûleur à gaz comportant une zone de plasmagenèse selon l'invention. La figure 3 est une vue schématique en coupe longitudinale d'un brûleur à gaz conforme à la présente invention, les mêmes chiffres de référence étant utilisés pour désigner des parties analogues.

Sur la figure 1, on peut voir le corps d'un réacteur 1 associé à des électrodes 2 (dont une seule est visible) logées dans des canaux 3 débouchant à l'intérieur du réacteur de manière à pouvoir engendrer dans celui-ci une zone de plasmagenèse Z2. Trois électrodes décalées de 120° sont prévues. Elles sont alimentées à partir d'un générateur électrique 4 de courant alternatif triphasé associé à un hacheur ou autre modulateur de ballast 5 (organe limitant les pertes d'énergie électrique et assurant la stabilité de la sone de plasmagenèse) par l'intermédiaire de conducteurs 6. Le courant peut être un courant triphasé industriel, basse tension — haute intensité (par exemple tension de 380 V et intensité de 100 à 200 A).

La zone de plasmagenèse Z2 sépare à l'intérieur du réacteur deux zones: une zone amont Z1 et une zone aval Z3. Une vanne distributrice réglable 7 reliée à une source d'agent oxydant O permet d'alimenter à volonté et à débit réglable les zones Z1, Z3 en agent oxydant, respectivement par l'intermédiaire de conduits 8, 9.

Une vanne distributrice réglable 11 reliée à une source d'agent réducteur R permet d'alimenter, à volonté et à débit réglable, les zones Z1, Z3 et lse canaux 3 des électrodes 2, en agent réducteur respectivement par l'intermédiaire des conduits 12, 13, 14.

Des conduits 15 débouchant dans les canaux 3 peuvent almenter ceux-ci en autres agents susceptibles de constituer le gaz plasmagène (notamment agents réducteurs, agents neutres, produits gazeux de la réaction recyclés, gaz véhiculant additifs).

Une électrode d'allumage 16 est prévue dans la zone Z1.

Cet agencement procure une grande souplesse d'utilisation puisqu'on peut, par action sur les vannes 7 et 11, injecter dans les zones Z1 et Z3 de 0 à 100 % du débit d'agents oxydants et de 0 à 100 % du débit d'agents réducteurs.

De même, dans la zone de plasmagenèse Z2, on peut injecter par le canal 3 autour des électrodes de 0 à 100 % du débit d'agents réducteurs et de 0 à 100 % d'autre gaz plasmagène. La zone Z1 est une zone de première réaction. La zone Z2 une zone de plasmagenèse fournissant éventuellement un apport thermique. Le choix du gaz plasmagène passant autour des électrodes 2 est fait de préférence de manière à éviter leur érosion et obtenir une bonne stabilité du plasma.

La zone Z3 est une zone de seconde réaction (ou post-réaction).

De préférence, les électrodes 2 sont montées mobiles de manière à pouvoir être rétractées en cas de non utilisation ou rapprochées pour l'amorçage du plasma. La compensation de leur usure et/ou de la consommation de leur matière par les réactions peut aussi être effectuée.

Dans le cas où le réacteur est un brûleur à gaz, par exemple à propane ou butane, l'agent oxydant peut être de l'air.

On peut injecter en Z1 un mélange gaz combustible-air-riche en gaz pour obtenir une première combustion. Dans les canaux 3, on envoie du gaz combustible par le conduit 14 et/ou un gaz neutre comme de l'azote et/ou les gaz de combustion recyclés. Ce (ou ces) gaz passe autour des électrodes (pouvant être en carbone par exemple) pour être injecté dans la zone plasmagène Z2.

Dans la zone Z3, on peut injecter de l'air par le conduit 9 et/ou du gaz combustible par le conduit 13 pour obtenir une post-combustion.

D'autres modes de fonctionnement peuvent être utilises.

Ainsi, par exemple, on peut injecter dans la zone Z1, par le conduit 12, un gaz vecteur contenant des particules de charbon, par le conduit 8 de l'air contenant de la vapeur d'eau. Les électrodes sont enrobées d'un flux d'azote (gaz neutre). Grâce à la présence de la zone de plasmagenèse Z2, il va pouvoir se former du gaz pauvre qui, si l'on envoie de l'air par le conduit 9 dans la zone Z3, pourra participer à une combustion.

Par contre, si l'on n'envoie pas d'agent oxydant dans la zone Z3, le réacteur fonctionnera en producteur d'atmosphère réductrice (gaz pauvre) utilisable pour certains traitements thermiques.

On peut encore envisager un mode de fonctionnement utilisant la consommation des électrodes par la réaction.

Ainsi, si les électrodes sont en métal et si l'on introduit des particules de carbone dans le brûleur, il y aura formation de carbure dans la zone de plasmagenèse Z2 à haute température.

La figure 2 illustre schématiquement un exemple de mode de réalisation d'un brûleur à gaz pour four comportant une zone de plasmagenèse selon l'invention. On peut voir la tuyère divergente 20 du brûleur ménagée dans les parois 21 du four.

Dans la zone amont Z1, le gaz est injecté de façon classique par des buses 22 alimentées par un conduit interne 23. Un conduit annulaire 24 permet d'injecter de l'air pour obtenir une première combustion dans la zone Z1. De préférence, l'air est injecté avec un mouvement tourbillonnaire pour favoriser le mélange des gaz et la stabilité de la flamme.

Les trois électrodes 25 associées aux porte-électrodes 26 sont logées dans des canaux 27 ménagés dans les parois du four et débouchant dans la zone de plasmagenèse Z2. Le gaz plasmagène est amené à travers les porte-électrodes de façon non représentée. De l'air est injecté dans la zone aval Z3 par l'intermédiaire de trois canaux 28 ménagés dans la paroi du four et associés à trois rainures 29 alimentées par trois conduits 30.

La zone Z1 peut être une zone de combustion riche. La zone de plasmagenèse Z2 est une zone d'apport thermique. La zone Z3 est une zone de post-combustion.

On a représenté en pointillé une électrode 25 en position de service et en position avancée lors de l'amorçage. Une électrode d'allumage 32 a été également illustrée.

Ainsi la figure 2 illustre un brûleur à gaz aménagé dans la paroi d'un four et délimitant les trois tranches consécutives d'un tel réacteur. Dans son étage amont aboutissent deux conduits coaxiaux: un conduit interne alimenté en gaz et débouchant par des buses d'injection et un conduit externe injectant tourbillonnairement de l'air pour établir une première réaction (combustion) dans cet étage amont. Dans la zone intermédiaire de plasmagenèse débouchent trois canaux à 120° ménagés dans la paroi du four pour loger des porte-électrodes et amener le gaz plasmagène. Enfin, on injecte de l'air dans l'étage aval par l'intermédiaire de trois autres canaux ménages eux-aussi dans la paroi du four et associés à trois rainures alimentées par trois conduits.

La présente invention a également pour objet une variante de réalisation de brûleur propre à minimiser la formation d'oxydes d'azote et l'érosion des électrodes par développement du plasma en milieu réducteur et à leur assurer une protection supplémentaire vis-à-vis de l'oxydation par injection d'une partie de combustible comme gaz plasmagène au niveau des électrodes.

Comme on le voit sur la figure 3, la chambre à plasma est représentée en 20 avec sa paroi 21 en matière silico-alumineuse (à haute teneur en alumine) ou de préférence en graphite. Sa zone intermédiaire de plasmagenèse Z2 est équipée de trois électrodes 25 à 120° les unes des autres montées sur des porte-électrodes 26 logés dans des canaux inclinés respectifs 27 ménagés dans la paroi 20, avec jeu périphérique permettant une insufflation G de gaz plasmagène ($CH_4$ ou $C_3H_8$) autour des porte-électrodes 26 dans la chambre 20 au droit de la zone intermédiaire Z2.

En bout de l'étage amont Z1 de la chambre 20 débouchent des conduits coaxiaux 23—24. Le conduit interne 23 achemine un combustible gazeaux C qui peut être le même que le gaz plasmagène insufflé en 27 dans la zone intermédiaire Z2, c'est-à-dire du méthane ou du propane et qu'on peut éventuellementpréchauffer; le conduit externe 24 refoulera le cas échéant dans l'étage amont Z1 de l'air comburant si l'on désire y établir une première réaction telle qu'une combustion.

En tout cas, de l'air comburant A en provenance du conduit d'alimentation 31 et éventuellement préchauffé est dérivé par des rainures 29 menant à des canaux 28 qui débouchent dans l'étage aval Z3.

Ainsi, le gaz combustible C éventuellement préchauffé est amené en fond de brûleur Z1. Une partie du combustible froid G est introduite également par les porte-électrodes 26. Le plasma est formé dans la partie Z2 de la chambre interne 20, en présence du gaz combustible seul. On conserve toutefois la possibilité d'injecter une partie de l'air comburant A en Z1, en amont du plasma, pour en améliorer éventuellement la stabilité. L'air comburant A est amené en Z3, en aval du plasma afin de minimiser l'érosion des électrodes 25 et la formation d'oxydes d'azote.

La formation du plasma dans une chambre alimentée seulement en gaz combustible C, donc par un faible débit gazeux, doit conduire à des températures de gaz très élevées dans cette zone Z2. Il risque donc d'en résulter une élévation prohibitive des températures de paroi 21. Pour s'opposer à cet effet, il est possible d'utiliser l'air comburant A conduit en Z3 en aval du plasma comme fluide de refroidissement de ces parois 21.

Il est possible également d'introduire le gaz combustible C dans la zone Z1 de manière que les parois 21 soient avantageusement léchées par du gaz combustible moins chaud.

On notera par ailleurs que des réactions (notamment pyrolyse du gaz combustible par effet thermique, photolyse ...) se produisent généralement dans la zone Z1.

D'autre part, il est nécessaire, pour assurer la combustion du gaz en aval Z3 du plasma, de réaliser un mélange satisfaisant avec l'air comburant. On prévoit pour cela une accélération du combustible par un convergent 21a puis une stabilisation de la flamme par un divergent 21b dans lequel est injecté l'air.

On notera le choix préférentiel de graphite (ou carbone) pour la constitution de la paroi de la chambre de plasma 20: la grande conductivité thermique de ce matériau permet de limiter le gradient thermique dans l'épaisseur de la paroi 21, donc d'y minimiser les contraintes thermomécaniques, la chambre 20 étant par ailleurs refroidie par circulation de l'air A dans les passages 29—28. Ces passages peuvent être avantageusement pourvus de cannelures jouant le rôle d'ailettes.

## Revendications

1. Réacteur haute température à oxydation totale ou partielle associée à une zone de plasmagenèse, caractérisé en ce qu'il comporte au moins deux étages (Z1, Z3) respectivement en amont et en aval de la zone de plasmagenèse (Z2) avec injection d'agents réducteurs (R) et/ou oxydants (O) dans l'un et/ou l'autre de ces étages, de manière à produire de l'énergie thermique et/ou des composés chimiques valorisables.

2. Réacteur selon la revendication 1, caractérisé en ce qu'il comporte un moyen de répartition réglable (7) du débit de l'agent oxydant entre l'étage amont (Z1) et l'étage aval (Z3).

3. Réacteur selon la revendication 1 ou 2, caractérise en ce qu'il comporte un moyen de répartition réglable (11) du débit de l'agent réducteur entre l'étage amont (Z1), l'étage aval (Z3) et/ou la zone intercalaire de plasmagenèse (Z2).

4. Réacteur selon la revendication 1, 2 ou 3, caractérisé en ce que le plasma est engendré en milieu réducteur afin de minimiser la formation d'oxydes d'azote et l'érosion des électrodes (25), lesquelles reçoivent une protection supplémentaire vis-à-vis de l'oxydation par injection d'une partie du combustible comme gaz plasmagène (G) à leur niveau.

5. Réacteur selon la revendication 4, caractérisé en ce que la paroi (21) de la chambre à plasma (20) peut être réalisée en matière silico-alumineuse à haute teneur en alumine, mais sera de préférence en graphite ou carbone.

6. Brûleur selon la revendication 4 ou 5, caractérisé en ce que la configuration de la chambre (20) est telle qu'une accélération du combustible s'effectue par un convergent (21a) ouis une stabilisation de la flamme par un divergent (21b) dans lequel est injecté de l'air.

7. Réacteur selon la revendication 4, 5 ou 6, caractérisé en ce que le gaz plasmagène est du méthane ou du propane.

## Patentansprüche

1. Hochtemperatur-reaktor zur vollstaendigen oder teilweisen oxidation in Verbindung mit einer plasmaerzeugenden Zone, dadurch gekennzeichnet, dass er wenigstens zwei Stufen (Z1, Z3) aufweist, die der plasmaerzeugenden zone (Z2) vor- bzw nachgeordnet sind, und dass Reduktionsmittel (R) und/oder Oxidationsmittel (O) in die eine und/oder andere dieser Stufen einblasbar sind so dass Waermeenergie und/oder verwertbare chemische Verbindungen freigesetz werden.

2. Reaktor nach Anspruch 1, dadurch gekennzeichnet, dass er eine regelbare Verteileirichtung (7) fuer das Oxidationsmittel zwischen der vorgeordneten Stufe (Z1) und der nachgeordneten Stufe (Z3) aufweist.

3. Reaktor nach Anspruch 1 oder 2, dadurch gekennzeichnet, dass er eine regelbare Verteileinrichtung (11) fuer das Reduktionsmittel zwischen der vorgeordneten Stufe (Z1), der nachgeordneten Stufe (Z3) und/oder der zwischengeordneten plasmaerzeugenden Zone (Z3) aufweist.

4. Reaktor nach einem der Ansprueche 1 bis 3, dadurch gekennzeichnet, dass das Plasma zur Minimierung der Stickoxiobildung und des Elektrodenabtrags von einer Reduktionsatmosphaere umgeben ist und dass die Elektroden (25) durch einblasen eines teils des Brennstoffes als Plasmaerzeugendes gas in ihrer Hoehe einen zusaetzlichen Oxidationsschutz erhalten.

5. Reaktor nach Anspruch 4, dadurch gekennzeichnet, dass die Wandung (21) der Plasmakammer (20) aus einem Silizium-aluminium-werkstoff mit hohem Aluminiumgehalt bestehen kann, vorzugsweise jedoch aus Graphit bzw. Kohlenstoff.

6. Brenner nach Anspruch 4 oder 5, dadurch gekennzeichnet, dass die Kammer (20) derart ausgebildet ist, dass eine Brennstoff-beschleunigung mittels einer Verengung (21a) und sodann eine Flammen-stabilisierung mittels einer Aufweitung (21b) bewirkbar ist, in welch letztere Luft einblasbar ist.

7. Reaktor nach einem der Ansprueche 4 bis 6, dadurch gekennzeichnet, dass das Plasmaerzeugende Gas Methan oder Propan ist.

## Claims

1. High-temperature reactor with partial or total oxidation associated with a plasma-generation zone, characterized in that it comprises at least two stages (Z1, Z3) respectively upstream and downstream of the plasma-generation zone (Z2) with injection of reducing and agents (R) or oxidising agents (O) in one and/or the other of these stages, in such a manner as to produce thermal energy and/or useable chemical components.

2. Reactor according to claim 1 characterized in that it comprises a means (7) for control of the distribution of the flow of the oxidising agent between the upstream stage (Z1) and the downstream stage (Z2).

3. Reactor according to claim 1 or 2 characterized in that it comprises a means (11) for control of the distribution of the flow of reducing agent between the upstream stage (Z1), the downstream stage (Z3) and/or the intervening plasma-generation zone.

4. Reactor according to claim 1, 2 or 3 characterized in that the plasma is generated in a reducing atmosphere in order to minimize the formation of oxides of nitrogen and the erosion of the electrodes (25), the latter receiving additional protection against oxidation by injection in the region thereof of part of the combustible as plasma-generating gas (G).

5. Reactor according to claim 4 characterized in that the wall (21) of the plasma chamber (20) can be constructed of silico-aluminous material with a high aluminium content, but is preferably of graphite or carbon.

6. Burner according to claim 4 or 5 characterized in that the shape of the chamber (20) is such that an acceleration of the combustible is effected by a convergent section (21a) and then a stabilisation of the flame by a divergent section (21b) in which air is injected.

7. Reactor according to claim 4, 5 or 6 characterized in that the plasma-generating gas is methane or propane.

FIG.:1

0 130 913

FIG.:2

FIG.:3